(19) Europäisches Patentamt
European Patent Office
Office européen des brevets

(11) EP 3 325 928 B1

(12) EUROPÄISCHE PATENTSCHRIFT

(45) Veröffentlichungstag und Bekanntmachung des Hinweises auf die Patenterteilung:
06.04.2022   Patentblatt 2022/14

(21) Anmeldenummer: 16750098.2

(22) Anmeldetag: 21.07.2016

(51) Internationale Patentklassifikation (IPC):
G01J 3/02 (2006.01)          G01J 3/28 (2006.01)
G01J 3/42 (2006.01)          G01N 21/27 (2006.01)

(52) Gemeinsame Patentklassifikation (CPC):
G01J 3/42; G01J 3/0232; G01J 3/0297; G01J 3/28;
G01N 21/39

(86) Internationale Anmeldenummer:
PCT/EP2016/001275

(87) Internationale Veröffentlichungsnummer:
WO 2017/016657 (02.02.2017 Gazette 2017/05)

(54) **VERFAHREN UND VORRICHTUNG ZUR KALIBRATION EINES OPTISCHEN RESONATORS, VERWENDUNG DER VORRICHTUNG, VERWENDUNG EINES OPTISCHEN MODULATORS UND COMPUTERPROGRAMMPRODUKT**

METHOD AND DEVICE FOR CALIBRATING AN OPTICAL RESONATOR, USE OF THE DEVICE, USE OF AN OPTICAL MODULATOR, AND COMPUTER PROGRAM PRODUCT

PROCÉDÉ ET DISPOSITIF D'ÉTALONNAGE D'UN RÉSONATEUR OPTIQUE, EMPLOI DU DISPOSITIF, EMPLOI D'UN MODULATEUR OPTIQUE ET PRODUIT-PROGRAMME D'ORDINATEUR

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 24.07.2015   DE 102015009595

(43) Veröffentlichungstag der Anmeldung:
30.05.2018   Patentblatt 2018/22

(73) Patentinhaber: Airyx GmbH
69214 Eppelheim (DE)

(72) Erfinder:
• FINKENZELLER, Henning
68723 Plankstadt (DE)
• PÖHLER, Denis
69214 Eppelheim (DE)
• PLATT, Ulrich
69221 Dossenheim (DE)
• HORBANSKI, Martin
69126 Heidelberg (DE)

(74) Vertreter: Lippert Stachow Patentanwälte
Rechtsanwälte
Partnerschaft mbB
Frankenforster Strasse 135-137
51427 Bergisch Gladbach (DE)

(56) Entgegenhaltungen:
DE-A1-102012 106 867     US-A- 5 999 259
US-A- 6 094 267

• HERBELIN J M ET AL: "SENSITIVE MEASUREMENT OF PHOTON LIFETIME AND TRUE REFLECTANCES IN 2AN OPTICAL CAVITY BY A PHASE-SHIFT METHOD", APPLIED OPTICS, OPTICAL SOCIETY OF AMERICA, WASHINGTON, DC; US, Bd. 19, Nr. 1, 1. Januar 1980 (1980-01-01) , Seiten 144-147, XP002014375, ISSN: 0003-6935, DOI: 10.1364/AO.19.000144

# EP 3 325 928 B1

**Beschreibung**

Die Erfindung betrifft ein Verfahren und eine Vorrichtung zur Kalibration eines optischen Resonators. Insbesondere betrifft die Erfindung ein Verfahren und eine Vorrichtung zur Kalibration der Reflektivität bzw. der effektiven Reflektivität bzw. der Weglänge eines optischen Resonators. Ferner betrifft die Erfindung ein Computerprogrammprodukt. Die Absorptionsspektroskopie, wie z.B. die differentielle optische Absorptionsspektroskopie (DOAS), ist eine Methode zur berührungslosen Messung von Spurengasen. DOAS nutzt die charakteristische wellenlängenabhängige Absorption von Licht durch Moleküle zur quantitativen Messung ihrer Konzentration. Um eine ausreichende Sensitivität für die zu messenden Stoffe zu erhalten sind Absorptionswege von einigen 100 m bis 20 km nötig. Um den benötigten langen Lichtweg in einer kompakten Messzelle von etwa 10 cm bis 200 cm Länge zu realisieren, wurden z.B. die Cavity Enhanced DOAS (CE-DOAS) und die BB-CEAS (Broad Band Cavity Enhanced Absorption Spectroscopy) entwickelt. Bei diesen Methoden wird ein gefalteter Lichtweg von typischerweise mehreren Kilometern Länge innerhalb eines optischen Resonators zwischen zwei hochreflektiven Spiegeln (Reflektivität > 99%) durch Vielfachreflektion erzeugt. Bei Anwesenheit von (differentiellen) Absorbern zwischen den Spiegeln werden dem Spektrum die (differentiellen) Absorptions-Strukturen der Absorber aufgeprägt. Generell gilt das Lambert-Beersche Gesetz für die Abschwächung von Licht:

$$I(\lambda) = I_0(\lambda) * \exp(-c * \sigma(\lambda) * L(\lambda)) \qquad (1).$$

Hierbei ist $I_0(\lambda)$ das ursprüngliche Spektrum ohne Absorptionseffekte, $I(\lambda)$ das Spektrum nach Durchgang des Lichtweges $L(\lambda)$, c die Konzentration eines Spurenstoffes und $\sigma(\lambda)$ der Absorptions-Wirkungsquerschnitt mit der Einheit [cm$^2$]. Letztere liegen für die verschiedenen Spurengase als Materialparameter vor. Ist die Weglänge $L(\lambda)$ spektral bestimmt, kann mit Hilfe eines spektralen Auswertealgorithmus auf die Konzentrationen c der Spurengase rückgeschlossen werden. Dies kann bei resonatorgestützten Messungen der BB-CEAS- oder CE-DOAS-Algorithmus sein mit:

$$\frac{I_0(\lambda)}{I(\lambda)} - 1 = c * \sigma(\lambda) * L(\lambda),$$

wobei $L(\lambda)$ die Weglänge ohne Absorber darstellt.

Die Weglänge in einem optischen Resonator hängt insbesondere von folgenden Parametern ab:

- Reflektivität der Spiegel: Die verwendeten Spiegel sind dielektrisch beschichtet und daher nur in einem sehr begrenzten Spektralbereich hochreflektiv. Die Weglänge variiert dadurch stark mit der Wellenlänge. Zusätzlich sind die optischen Eigenschaften der Spiegel temperaturabhängig und dadurch zeitlich variabel.

- Absorptivität der Spiegel: Insbesondere wegen ständiger Ablagerung feinster Partikel, die auch durch Reinigen nicht vollständig und reproduzierbar entfernt werden können, ist die Weglänge im zeitlichen Verlauf und zwischen einzelnen Messreihen sehr variabel.

- Reinheit und Stabilität der Luft im Resonator: Dichte-Inhomogenitäten in der Luft wirken wie Linsen; Aerosole verkürzen den Lichtweg durch Streuung.

- Optischen Ausrichtung und Justierung der Spiegel.

Wegen dieser Vielfalt an variablen Parametern ist die Weglänge a priori unbekannt und muss für jedes Instrument neu bestimmt werden. Die Weglänge $L(\lambda)$ geht direkt in das Ergebnis der Konzentrationsmessung ein und muss in ihrer spektralen Form und absolut mit ausreichender Genauigkeit vorliegen:
Die korrekte Form der Weglänge $L(\lambda)$ ist für den Auswerte-Algorithmus essentiell, denn ohne Kenntnis der variablen Weglänge würde die Größe von Absorptionsstrukturen bei verschiedenen Wellenlängen unkontrolliert moduliert. Im Allgemeinen ist dann eine Zuordnung der verschiedenen, zum Teil überlagerten Absorptionsstrukturen zu bestimmten Spurenstoffen nicht mehr möglich. D.h. die Konvergenz des Auswerteverfahrens ist gestört. Die absolute Weglänge ist essentiell, um aus den erfolgreich zu Spurenstoffen zugeordneten Abschwächungen tatsächliche Spurenstoff-Konzentrationen bestimmen zu können. Gemäß des Lambert-Beerschen Gesetzes stehen dann nämlich Konzentrationen und Lichtweg in einem indirekt proportionalen Zusammenhang:

$$c * L = const \qquad (2)$$

$$\Rightarrow c \propto 1/L \qquad (3)$$

Wird beispielsweise die Weglänge um 10% überschätzt, so werden die Konzentrationen aller zugeordneter Spurenstoffe um 10% unterschätzt.

Die Anzahl der Durchgänge eines einzelnen in den Resonator eingekoppelten Photons bis zur Auskopplung zum Detektor ist nicht deterministisch. Die Beschreibung des statistischen Verhaltens eines großen Ensembles von Photonen im Resonator ist jedoch möglich. Die Bestimmung dieser statistischen Kenngrößen in einem spezifischen Präparations-Zustand des Resonators (z.B. vakuumierte Messzelle, Standard-Luftgemisch, usw.) wird im Sinne dieser Beschreibung als "Kalibration eines optischen Resonators" bezeichnet.

Gebräuchliche deskriptive Parameter für die "Kalibration eines optischen Resonators" sind dabei:

- die Spiegel-Reflektivität $R(\lambda)$;
- die geometrische Länge $d$ des Resonators;
- die Abklingzeit $\tau(\lambda)$; und
- die Weglänge oder effektive Weglänge $L(\lambda)$ des Resonators.

Die Weglänge oder die effektive Weglänge $L(\lambda)$ des optischen Resonators ist der mittlere Weg, den Photonen im Resonator zwischen Ein- und Auskoppelung zurücklegen.

Analog zur Weglänge $L(\lambda)$ wird oft auch die effektive Reflektivität $R(\lambda)$ des Resonators angegeben. Dabei gilt der Zusammenhang:

$$L(\lambda) \approx \frac{d}{1 - R(\lambda)} \qquad (4.1)$$

für eine vakuumierte Messzelle und

$$L(\lambda) \approx \frac{d}{1 - R(\lambda) + d\varepsilon(\lambda)} \qquad (4.2)$$

für eine Messzelle mit einem Referenzgas, wobei $\varepsilon$ der Extinktions-Koeffizient ist.

Hierbei ist $d$ der Abstand der Spiegel.

Die Abklingzeit $\tau(\lambda)$ ist definiert als

$$\tau(\lambda) = \frac{L(\lambda)}{c_{Licht}} \qquad (5).$$

Bisherige Weglängenbestimmungs-Methoden lassen sich in zeitaufgelöste Verfahren und Verfahren mit Absorbern einteilen.

Als zeitaufgelöstes Verfahren ist z.B. das Broad Band Cavity Ringdown (BB-CRD) Verfahren zu nennen, bei dem das Abklingen des gesamten Spektrums nach dem Ausschalten einer Lichtquelle beobachtet wird. Als Intensitäts-Detektor werden üblicherweise Photo-Multiplier (PM) eingesetzt, die jedoch a priori keine spektralen Informationen liefern. Die Abklingkurve liefert zudem nur einen ungefähren, mittleren Weglängenwert.

Bei der sogenannten Narrow Band Cavity Ringdown (NB-CRD) Methode wird das eingekoppelte Licht spektral gefiltert. Die Abklingkurve wird, wiederum mit einem Photo-Multiplier, nacheinander für verschiedene Wellenlängen abgetastet, so dass eine gewisse spektrale Auflösung erreicht werden kann. Die spektrale Auflösung ist jedoch auf die Bandbreite des eingesetzten Filters begrenzt. Zudem ist die Bestimmung der Weglänge über die volle Bandbreite des Spektrometers von mehr als 30 nm mit Hilfe eines einzelnen Filters spektral hochaufgelöst nicht möglich.

Ein weiteres bekanntes zeitaufgelöstes Verfahren nutzt ein zweidimensionales CCD-Array, mit welchem die Abklingkurve abgetastet wird. Hierzu wird das Lichtspektrum nacheinander auf einzelne Zeilen des Detektors abgebildet, so dass diese die Abklingkurve für einzelne Zeitfenster erfassen. Diese Methode ist bisher auf Grund von technischen Limitierungen als reine Kalibrationstechnik von CE-DOAS Geräten noch nicht eingesetzt worden. Das Verfahren erfordert einen hohen technischen und finanziellen Aufwand. Insbesondere ist das zweidimensionale CCD-Array mit Spezialelektronik vielfach teurer als andere, für die Konzentrationsbestimmung ausreichende, eindimensionale Detektoren.

Andere Verfahren zur Bestimmung der Weglänge $L(\lambda)$ eines optischen Resonators beruhen auf der Verwendung von Absorbern. Beispielsweise werden Absorber mit differentiellen Strukturen verwendet ($NO_2$, $SO_2$). Sofern diese Absorber in bekannten Konzentrationen in den Resonator eingebracht werden können, erlaubt die Messung von deren Absorptionsstrukturen eine spektrale und absolute Weglängenbestimmung. Nachteilig ist jedoch, dass anwendbare Prüfgase bzw. Kalibrationsgase des zu messenden Stoffs oftmals nicht stabil sind und vor Ort aufwendig hergestellt werden müssen.

Auch der in Luft natürlich vorhandene Stoßkomplex $O_2$-$O_2$ kann als Absorber dienen. Das Sauerstoff-Dimer weist geringe differentielle Absorptionsstrukturen auf und tritt korreliert zum Sauerstoffgehalt in der Luft auf. Die dadurch hervorgerufenen Absorptionsstrukturen können zur Weglängenbestimmung herangezogen werden. Allerdings sind die Strukturen schwach und nicht in jedem Spektralbereich vorzufinden. Damit ist die Methode beschränkt auf Spezialanwendungen im wissenschaftlichen Bereich.

Darüber hinaus werden auch Rayleigh-Streuer, z.B. Helium, zur Weglängenbestimmung des Resonators eingesetzt. Die Luft zwischen den Spiegeln des Resonators wird ersetzt durch Gas mit anderem Rayleigh-Streuquerschnitt. Infolgedessen wird weniger/mehr Licht aus dem Lichtweg gestreut und dieser verlängert/verkürzt. Aus der Änderung der Intensität am Spektrometer kann die Weglänge berechnet werden. Diese Methode ist fast ausschließlich auf die Anwendung im Labor bestimmt, denn die Handhabung von Gasvorräten im Feld ist kritisch und die vollständige Spülung schwierig herzustellen und zu detektieren. Zudem kann die Messung durch Wind beeinträchtigt werden.

In der Publikation Herbelin J. M. et al: "Sensitive measurement of photon lifetime and true reflectances in an optical cavity by a phase-shift method", Applied Optics, Optical Society of America, Ed. 19, No. 1, 1 January 1980, Seiten 144 bis 147, ist offenbart, die Aufenthaltszeit eines Photons in einem Resonator, die mit der Weglänge korreliert, die das Photon in dem Resonator zurücklegt, zu ermitteln, indem der Wert für eine Phasenverschiebung ermittelt wird, die sich aus zwei Messungen ergibt, wobei bei einer ersten Messung ein Lichtstrahl vor dem Eintritt in den Resonator mit einer Modulationsfrequenz moduliert wird und bei einer zweiten Messung der aus dem Resonator austretende Lichtstrahl mit dieser Modulationsfrequenz moduliert wird, bevor er auf den Detektor trifft.

Trotz dieser Vielzahl an Vorschlägen gibt es bisher kein Verfahren, welches die Weglängenbestimmung in optischen Resonatoren vollumfänglich löst. Deshalb wird die CE-DOAS und/oder BB-CEAS Methode bisher nicht in einem ihrem Potential entsprechenden Umfang eingesetzt.

Es ist daher eine Aufgabe der vorliegenden Erfindung, die Kalibration eines optischen Resonators zu verbessern.

Diese Aufgabe wird durch die Gegenstände der nebengeordneten Ansprüche gelöst. Vorteilhafte Ausführungsformen sind Gegenstand der Unteransprüche.

Ein erster unabhängiger Aspekt zur Lösung der Aufgabe betrifft ein Verfahren zur

Kalibration eines optischen Resonators, nach Anspruch 1, umfassend die Schritte:

- Erzeugen von Lichtpulsen einer bekannten Pulsfrequenz mittels einer Lichtpulserzeugungseinheit;
- Einkoppeln der Lichtpulse in den Resonator;
- Detektieren von aus dem Resonator austretendem Licht mittels einer Detektionseinrichtung zur Erzeugung eines von dem zu detektierenden Licht abhängigen Detektionssignals (also auf Basis des aus dem Resonator austretenden Lichts), wobei die Detektionseinrichtung ausgelegt ist, das Detektionssignal mit Hilfe eines Modulators als ein mit einer Modulationsfrequenz moduliertes Signal zu erzeugen, wobei die Modulationsfrequenz und die Pulsfrequenz der erzeugten Lichtpulse miteinander synchronisiert werden, wobei vor dem Detektieren des aus dem Resonator (20) austretenden Lichts eine Phasenbeziehung zwischen der Pulsfrequenz der erzeugten Lichtpulse und der Modulationsfrequenz variiert oder eingestellt wird und das Detektieren des aus dem Resonator austretenden Lichts für verschiedene Phasenbeziehungen durchgeführt wird; und
- Kalibrieren des optischen Resonators auf Basis des Detektionssignals, wobei das Kalibrieren des optischen Resonators ein Erstellen eines phasenabhängigen Intensitätsverlaufs des modulierten Signals und ein Charakterisieren des erstellten phasenabhängigen Intensitätsverlaufs mit Hilfe von Charakterisierungsparameter umfasst.

Unter der Kalibration eines optischen Resonators ist die Bestimmung von Kalibrationsparametern zu verstehen. Insbesondere ist unter der Kalibration eines optischen Resonators die Bestimmung der Reflektivität bzw. der effektiven Reflektivität und/oder der Weglänge $L(\lambda)$ des optischen Resonators zu verstehen.

Unter der "Weglänge" eines optischen Resonators wird der von Licht im optischen Resonator zurückgelegte Weg verstanden. In Folge der Reflektionen an den Resonatorspiegeln, deren Reflektivität vorzugsweise größer als 99% ist, beträgt die Weglänge ein Vielfaches der geometrischen Resonatorlänge. Beispielsweise kann die Weglänge des Lichts im optischen Resonator mehrere Kilometer betragen, während die Resonatorspiegel des optischen Resonators nur einen Abstand von etwa 10 cm bis 200 cm aufweisen.

Das Licht bzw. die Lichtpulse können mittels einer Lichtpulserzeugungseinheit erzeugt werden. Die Lichtpulserzeugungseinheit kann z.B. eine gepulste Lichtquelle, beispielsweise eine gepulste LED-Lampe oder ein gepulster Laser sein. Die Lichtpulserzeugungseinheit kann aber auch eine ungepulste Lichtquelle, beispielsweise eine LED-Lampe oder einen Laser, und zusätzlich einen Shutter umfassen. Dabei ist die Pulsfrequenz der Lichtpulserzeugungseinheit bekannt bzw. vorbestimmt. Insbesondere ist die Pulsfrequenz einstellbar. Die Pulsfrequenz kann z.B. einige kHz betragen. Vorzugsweise beträgt die Pulsfrequenz 0,5 bis 50 kHz, mehr bevorzugt 1 bis 30 kHz, noch mehr bevorzugt 2 bis 20 kHz, am bevorzugtesten 5 bis 10 kHz. Die Pulsfrequenz kann auch fest vorgegeben werden, d.h. auf einen bestimmten Wert fixiert sein. Insbesondere kann die Pulsfrequenz innerhalb der vorgenannten Wertebereiche eingestellt werden.

Das Einkoppeln der Lichtpulse kann z.B. über einen Resonatorspiegel des optischen Resonators erfolgen. Insbesondere kann das Einkoppeln der Lichtpulse in den Resonator mittels eines optischen Elements, vorzugsweise einer Linse, erfolgen.

Das von dem Resonator austretende Licht wird mittels einer Detektionseinrichtung detektiert und ein entsprechendes Detektionssignal wird auf Basis des aus dem Resonator austretenden Lichts erzeugt. Dabei wird das Detektionssignal mit Hilfe eines Modulators, welcher eine vorgegebene bzw. bestimmte Modulationsfrequenz aufweist, erzeugt. Das Detektionssignal stellt somit ein mit der Modulationsfrequenz moduliertes Signal dar.

Die Modulationsfrequenz des Modulators entspricht im Wesentlichen der Pulsfrequenz der erzeugten Lichtpulse. Alternativ beträgt die Modulationsfrequenz des Modulators im Wesentlichen ein ganzzahliges Vielfaches der Pulsfrequenz der erzeugten Lichtpulse. Alternativ beträgt die Pulsfrequenz der erzeugten Lichtpulse im Wesentlichen ein ganzzahliges Vielfaches der Modulationsfrequenz des Modulators. Beispielsweise kann die Modulationsfrequenz des Modulators im Wesentlichen das zweidrei- vierfache usw. oder die Hälfte, ein Drittel, ein Viertel usw. der Pulsfrequenz der erzeugten Lichtpulse betragen. Insbesondere stimmt die Modulationsfrequenz des Modulators im Wesentlichen mit der Pulsfrequenz der erzeugten Lichtpulse überein. Der Ausdruck "im Wesentlichen" bedeutet in diesem Zusammenhang, dass geringfügige Abweichungen möglich oder sogar gewünscht sind. So können z.B. gewünschte geringfügige Abweichungen vorteilhafterweise dazu führen, dass sich im Laufe der Zeit eine Phasenbeziehung zwischen den Lichtpulsen und die durch den Modulator bewirkte Modulation, insbesondere des durch den Modulator erzeugten Detektionssignals bzw. modulierten Signals oder die durch den Modulator bewirkte Modulation der Lichtpulse, ändert. Insbesondere können die Modulationsfrequenz des Modulators und die Pulsfrequenz der erzeugten Lichtpulse eine Abweichung voneinander derart aufweisen, dass in einem ersten Zeitfenster eine erste Phasenbeziehung zwischen den Lichtpulsen und des durch den Modulator erzeugten modulierten Signals bzw. die durch den Modulator bewirkte Modulation der Lichtpulse vorliegt und in einem zweiten Zeitfenster eine zweite Phasenbeziehung zwischen den Lichtpulsen und des durch den Modulator erzeugten modulierten Signals bzw. die durch den Modulator bewirkte Modulation der Lichtpulse vorliegt, wobei sich die erste Phasenbeziehung von der zweiten Phasenbeziehung unterscheidet. Eine solche Phasendrift oder Phasenmodulation kann beim Kalibrieren berücksichtigt werden und die Genauigkeit des Verfahrens erhöhen. Die genaue Größe der gewünschten Abweichung zwischen der Modulationsfrequenz des Modulators und der Pulsfrequenz der erzeugten Lichtpulse, welche durch den Begriff "im Wesentlichen gleich" zum Ausdruck gebracht wird, hängt von physikalischen Parametern wie z.B. von der jeweiligen Messzeit bzw. dem jeweiligen Resonatorzustand und/oder der jeweiligen Frequenz ab. Somit muss eine gegebenenfalls gewünschte Abweichung der Frequenzen für den jeweiligen Einzelfall ermittelt werden. Zur genauen Bestimmung der Abweichung muss im Prinzip eine Intensitätsflanke ausreichend genau bestimmt werden. Die Länge der Flanke hängt aber vom Zustand des Resonators, also dem Lichtweg im Resonator, ab. Sofern eine Abweichung zwischen der Modulationsfrequenz des Modulators und der Pulsfrequenz der erzeugten Lichtpulse beabsichtigt ist, sollte die Abweichung der Frequenzen so gewählt werden, dass sich die Phasenbeziehung zwischen den Lichtpulsen und des durch den Modulator erzeugten Detektionssignals innerhalb der Messzeit eines Datenpunktes um weniger als 1/5, insbesondere um weniger als 1/10, der geringeren Frequenz von beiden, d.h. der geringeren Frequenz aus der Modulationsfrequenz des Modulators und der Pulsfrequenz der erzeugten Lichtpulse, ändert.

Der Modulator wird derart gesteuert werden, dass seine Modulationsfrequenz eine oben angegebene Beziehung zur Pulsfrequenz der erzeugten Lichtpulse aufweist. Mit anderen Worten werden die Lichtpulserzeugungseinheit und der Modulator hinsichtlich der Frequenz synchronisiert. Folglich liegt auch die Modulationsfrequenz des Modulators in den bezüglich der Lichtpulse genannten Frequenzbereichen. Insbesondere kann die Modulationsfrequenz des aus dem optischen Resonator austretenden Lichts eingestellt werden.

Das modulierte Signal wird für verschiedene Phasenbeziehungen erzeugt.

Auf Basis des modulierten Signals wird schließlich der optische Resonator kalibriert, d.h. zumindest ein Kalibrationsparameter bestimmt bzw. ermittelt bzw. berechnet. Insbesondere wird auf Basis des modulierten Signals die effektive Reflektivität und/oder die Weglänge des optischen Resonators bestimmt bzw. ermittelt bzw. berechnet.

Mit dem erfindungsgemäßen Verfahren ist es vorteilhafterweise möglich, den optischen Resonator zu kalibrieren. Insbesondere ist es möglich, die effektive Reflektivität und/oder die Weglänge eines optischen Resonators ohne den Einsatz von Verbrauchsmittel oder Gase zu ermitteln. Es kann im Vergleich zu bisherigen Methoden eine hohe absolute Genauigkeit sowie eine sehr gute Reproduzierbarkeit erreicht werden, die auch durch Umwelteinflüsse nur wenig verringert werden. Zudem sind die Anschaffungs-, Bau- und Betriebskosten gering. Insbesondere treten bei vernachlässigbarem Verschleiß keinerlei laufende Kosten auf.

In einer bevorzugten Ausführungsform des erfindungsgemäßen Verfahrens ist der Modulator ein optischer Modulator, mit welchem das aus dem Resonator austretende Licht moduliert wird. Das modulierte, insbesondere in seiner Intensität variierte Licht wird mittels eines Detektors der Detektionseinrichtung, vorzugsweise für verschiedene Phasenbeziehungen, detektiert bzw. gemessen. Das Kalibrieren erfolgt auf Basis des detektierten modulierten Lichts. Insbesondere entspricht in dieser Ausführungsform das detektierte modulierte Licht dem Detektionssignal bzw. dem modulierten Signal.

Das aus dem Resonator, beispielsweise aus einem zweiten Resonatorspiegel des Resonators, austretende Licht wird mittels eines optischen Modulators moduliert, d.h. die Intensität des austretenden Lichts bzw. der austretenden Lichtpulse wird moduliert bzw. variiert. Im einfachsten Fall wird das aus dem Resonator bzw. dem zweiten Resonatorspiegel austretende Licht mit der Modulationsfrequenz aus- und eingeblendet. In einer weiteren bevorzugten Ausführungsform des erfindungsgemäßen Verfahrens umfasst das Erzeugen des modulierten Signals ein Ändern der Sensitivität eines Detektors, insbesondere eines CCD-Sensors, der Detektionseinrichtung mit der Modulationsfrequenz. Alternativ oder zusätzlich umfasst das Erzeugen des modulierten Signals ein mit der Modulationsfrequenz moduliertes Auslesen des Detektors, insbesondere ein Verschieben von detektierten Photoelektronen zwischen einem photosensitiven Register und einem nicht-photosensitiven Ausleseregister des Detektors bzw. des CCD-Sensors mit der Modulationsfrequenz. Mit anderen Worten wird das modulierte Signal (Detektionssignal) dadurch erzeugt, dass die Sensitivität eines, insbesondere schaltbaren bzw. in der Sensitivität einstellbaren, Detektors, insbesondere eines CCD-Sensors, der Detektionseinrichtung mit der Modulationsfrequenz geändert wird. Insbesondere wird das modulierte Signal dadurch erzeugt, dass vom Detektor detektierte Photoelektronen zwischen einem photosensitiven Register und einem nicht-photosensitiven Ausleseregister mit der Modulationsfrequenz verschoben werden. Insbesondere werden die Photoelektronen, die während einer oder mehrerer "Dunkelzeiten" des Modulators gesammelt werden, verworfen bzw. gelöscht bzw. abgeführt. Damit wird erreicht, dass der Detektor zu diesen Zeiten deaktiviert wird bzw. insensitiv ist.

Erfindungsgemäß umfasst das Verfahren vor dem Detektieren des aus dem Resonator austretenden Lichts bzw. insbesondere des modulierten Lichts ein Variieren oder Einstellen einer Phasenbeziehung bzw. Phase zwischen der Lichtpulserzeugungseinheit und dem Modulator. Beispielsweise kann die Phase in Folge einer oben beschriebenen, insbesondere gewünschten, leichten Abweichung zwischen der Pulsfrequenz und der Modulationsfrequenz driften bzw. variieren. Alternativ oder zusätzlich kann zwischen den Lichtpulsen und des durch den Modulator erzeugten modulierten Signals bzw. die durch den optischen Modulator bewirkte Modulation der Lichtpulse, insbesondere mit Hilfe einer Steuereinheit, eine bestimmte Phasenbeziehung oder Phase eingestellt werden. Mit anderen Worten können die Lichtpulse und das modulierte Signal bzw. die durch den optischen Modulator bewirkte Modulation der Lichtpulse vorzugsweise eine bestimmte Phasenbeziehung oder Phase zueinander aufweisen. Die Phasenbeziehung bzw. Phase kann Werte von 0 bis $2\pi$ einnehmen. Die Phase bzw. Phasenbeziehung beschreibt insbesondere eine zeitliche und/oder örtliche Beziehung zwischen den Lichtpulsen und der durch den Modulator bewirkten Modulation. Die Phasenbeziehung bzw. Phase kann geändert werden. Mit anderen Worten ist die Phasenbeziehung bzw. Phase variierbar bzw. einstellbar.

Erfindungsgemäß umfasst das Detektieren des aus dem Resonator austretenden Lichts bzw. modulierten Lichts ein Detektieren des aus dem Resonator austretenden Lichts bzw. modulierten Lichts für verschiedene Phasenbeziehungen. Mit anderen Worten wird das modulierte Signal für unterschiedliche oder unterschiedlich eingestellte Phasenbeziehungen erzeugt oder wird das von dem optischen Modulator modulierte, d.h. in der Intensität variierte Licht, für unterschiedliche oder unterschiedlich eingestellte Phasenbeziehungen mittels eines Detektors detektiert bzw. gemessen.

Erfindungsgemäß umfasst das Detektieren des aus dem Resonator austretenden bzw. modulierten Lichts ein Erfassen bzw. Ermitteln der Intensität des aus dem Resonator austretenden bzw. modulierten Lichts bei verschiedenen Phasenbeziehungen bzw. Phasen. Mit anderen Worten wird ein phasenabhängiger Intensitätsverlauf erfasst bzw. erstellt. Unter einem phasenabhängigen Intensitätsverlauf werden im Sinne dieser Beschreibung eine Vielzahl von Intensitätswerten für verschiedene Phasenbeziehungen bzw. Phasen verstanden. Dabei kann sich der phasenabhängige Intensitätsverlauf aus diskret gemessenen Intensitätswerten zusammensetzen. Diese diskreten Werte können zu einem kontinuierlichen phasenabhängigen Intensitätsverlauf interpoliert werden.

Das Erstellen eines phasenabhängigen Intensitätsverlaufs umfasst somit die Ermittlung der phasenmodulierten Lichtintensität. Insbesondere umfasst das Erstellen eines phasenabhängigen Intensitätsverlaufs das Auftragen der detektierten Lichtintensität in Abhängigkeit der Phase in ein Diagramm. Beispielsweise kann die Lichtintensität, insbesondere die integrierte oder mittlere Lichtintensität, für verschiedene diskrete Phasen zwischen 0 und $2\pi$ gemessen werden. Beispielsweise kann die Phase in diskreten Schritten, vorzugweise in $2\pi/36$-Schritten, mehr bevorzugt in $2\pi/360$-Schritten, verändert werden oder auf ausgewählte Werte eingestellt werden. Alternativ kann die Phase während einer laufenden Messung der Lichtintensität, insbesondere von 0 bis $2\pi$, kontinuierlich verändert werden.

Erfindungsgemäß umfasst das Kalibrieren des optischen Resonators ferner ein Charakterisieren des erstellten phasenabhängigen Intensitätsverlaufs mit Hilfe von Charakterisierungsparametern. Charakterisierungsparameter können z.B. Fourierkoeffizienten sein. Alternativ oder zusätzlich können als Charakterisierungsparameter die Lage des Maximums und/oder Minimums, und/oder die Höhe des Maximums und/oder Minimums des erstellten phasenabhängigen Intensitätsverlaufs verwendet werden. Es versteht sich, dass auch andere oder zusätzliche Parameter zur Charakterisierung des erstellten phasenabhängigen Intensitätsverlaufs verwendet werden können.

In einer weiteren bevorzugten Ausführungsform des erfindungsgemäßen Verfahrens umfasst das Kalibrieren des optischen Resonators ferner ein Abgleichen bzw. Vergleichen des erstellten phasenabhängigen Intensitätsverlaufs mit einer Vielzahl von modellierten phasenabhängigen Intensitätsverläufen, insbesondere mit modellierten phasenabhängigen Intensitätsverläufen, welche für eine Vielzahl unterschiedlicher Weglängen numerisch simuliert oder berechnet wurden. Die Vielzahl an modellierten phasenabhängigen Intensitätsverläufen kann z.B. bereits im Vorfeld der Messung berechnet worden sein und dem vorliegenden erfindungsgemäßen Verfahren bereitgestellt werden. Beispielsweise können die simulierten bzw. modellierten phasenabhängigen Intensitätsverläufe in einem Speicher einer Auswerteeinheit abgelegt oder gespeichert sein.

In einer weiteren bevorzugten Ausführungsform des erfindungsgemäßen Verfahrens umfasst das Kalibrieren des optischen Resonators, insbesondere das Abgleichen des erstellten phasenabhängigen Intensitätsverlaufs mit einer Vielzahl von modellierten phasenabhängigen Intensitätsverläufen, ein Ausgleichen und/oder Fitten auf Basis einer Modellfunktion. Die Modellfunktion kann Charakterisierungsparameter und/oder modellierte phasenabhängige Intensitätsverläufe umfassen. Insbesondere umfasst das Kalibrieren ein Ausgleichen und/oder Fitten des erstellten phasenabhängigen Intensitätsverlaufs an die modellierten phasenabhängigen Intensitätsverläufe. Vorzugsweise umfasst das Ausgleichen und/oder Fitten eine Ausgleichsrechnung. Weiter vorzugsweise umfasst das Ausgleichen und/oder Fitten ein lineares Ausgleichen und/oder lineares Fitten.

Das Fitten erfolgt vorzugsweise mit Hilfe des Levenberg-Marquardt-Algorithmus. Dabei kann die Größe der Restrukturen (RMS) als Maß für die Qualität der Zuordnung dienen. Die Kurve der besten Übereinstimmung indiziert die zum optischen Resonator zugehörige Weglänge.

In einer weiteren bevorzugten Ausführungsform des erfindungsgemäßen Verfahrens umfasst das Detektieren des aus dem Resonator austretenden Lichts und/oder das Erzeugen des modulierten Signals ein Integrieren über eine Vielzahl von modulierten Lichtpulsen, d.h. Zyklen oder Perioden. Das detektierte Licht bzw. die detektierten Lichtpulse wird/werden also über eine Vielzahl von Perioden oder Zyklen integriert. Die Integration kann z.B. über mehrere Millisekunden erfolgen, was einigen Tausend Zyklen entspricht. Mit anderen Worten wird vorzugsweise eine mittlere Intensität des von dem optischen Modulator modulierten Lichts gemessen.

Alternativ oder zusätzlich erfolgt das Detektieren des aus dem Resonator austretenden bzw. modulierten Lichts mittels eines Spektrometers. Wird ein Spektrometer als Detektor verwendet, so kann vorteilhafterweise die Auswertung für jeden Kanal des Spektrometers einzeln durchgeführt werden.

Ein weiterer unabhängiger Aspekt zur Lösung der Aufgabe betrifft eine Resonatorvorrichtung, wie im Anspruch 8 definiert.

Vorzugsweise eignet sich die Resonatorvorrichtung zur Messung von Gasen bzw. Spurengasen.

In einer bevorzugten Ausführungsform ist der Modulator ein optischer Modulator zum Modulieren des aus dem Resonator austretenden Lichts mit der Modulationsfrequenz. Zudem umfasst die Detektionseinrichtung einen Detektor zum Detektieren des modulierten Lichts.

In einer weiteren bevorzugten Ausführungsform der erfindungsgemäßen Resonatorvorrichtung umfasst der optische Modulator eine Chopper-Einheit. Die Chopper-Einheit kann z.B. einen Stimmgabel-Chopper, eine DLP-Einheit (DLP = Digital Light Processing), einen Flüssigkristall (Liquid Crystal), ein Schlitzrad, einen rotierenden Polygonspiegel, einen akustooptischen Modulator oder einen elektrooptischen Modulator umfassen. Insbesondere bei der Verwendung elektronischer optischer Modulatoren, beispielsweise eines Flüssigkristall-Element-Shutters, können vorteilhafterweise mechanische Elemente und somit der Verschleiß solcher mechanischer Elemente vermieden werden.

In einer weiteren bevorzugten Ausführungsform umfasst die Detektionseinrichtung einen Detektor, insbesondere einen CCD-Chip bzw. CCD-Sensor, welcher mittels des Modulators schaltbar und/oder in seiner Sensitivität einstellbar ist. Insbesondere kann der Detektor mit Hilfe des Modulators aktiviert und deaktiviert bzw. ein- und ausgeschaltet werden. Beispielsweise kann das Steuern oder Schalten bzw. das Einstellen der Sensitivität des Detektors bzw. CCD-Chips über eine an den Detektor angelegte Spannung erfolgen. Damit in der photosensitiven Schicht eines CCD-Sensors Photonen in Elektronen gewandelt und gesammelt werden, muss z.B. eine geeignete Spannung angelegt werden.

In einer weiteren bevorzugten Ausführungsform umfasst die Vorrichtung ferner eine Steuereinheit zum Ansteuern der Lichtpulserzeugungseinheit und/oder des Modulators und/oder zum Einstellen einer Phasenbeziehung zwischen der Lichtpulserzeugungseinheit und dem Modulator.

In einer weiteren bevorzugten Ausführungsform umfasst die Detektionseinrichtung ein Spektrometer bzw. ist der Detektor ein Spektrometer. Somit kann mit der erfindungsgemäßen Resonatorvorrichtung beispielsweise auch eine Cavity Enhanced DOAS und/oder eine BB-CEAS Messung durchgeführt werden. Das Spektrometer kann also vorteilhafterweise nicht nur als Detektor für die Bestimmung der Weglänge des optischen Resonators verwendet werden, sondern auch zur Bestimmung der Konzentration von Spurengasen. Dies hat den synergetischen Effekt, dass mit der

EP 3 325 928 B1

erfindungsgemäßen Vorrichtung nicht nur die Spurengaskonzentration mittels Cavity Enhanced DOAS und/oder BB-CEAS gemessen werden kann, sondern zugleich auch die dafür notwendige Kalibration, d.h. die Bestimmung der effektiven Reflektivität und/oder der Weglänge des für die Cavity Enhanced DOAS und/oder der BB-CEAS verwendeten optischen Resonators, durchgeführt werden kann. Zudem kann bei der Bestimmung der Weglänge des optischen Resonators vorteilhafterweise die maximale Auflösung erreicht werden, wie sie auch während der eigentlichen Messung, d.h. bei der berührungslosen Bestimmung von Spurengasen, genutzt wird.

Vorzugsweise ist die erfindungsgemäße Resonatorvorrichtung eine Cavity Enhanced DOAS- oder eine BB-CEAS-Vorrichtung mit einer integrierten Kalibrationsmöglichkeit, insbesondere mit einer Autokalibrationsfunktion.

Erfindungsgemäß umfasst die erfindungsgemäße Resonatorvorrichtung eine Auswerteeinheit zum Kalibrieren des optischen Resonators, d.h. zum Ermitteln von Kalibrationsparametern, insbesondere zum Bestimmen der Reflektivität und/oder der Weglänge des optischen Resonators auf Basis des von der Detektionseinrichtung erzeugten modulierten Signals bzw. auf Basis des detektierten modulierten Lichts.

Die Auswerteeinheit umfasst vorzugsweise einen Speicher zum Speichern einer Vielzahl von modellierten bzw. simulierten phasenabhängigen Intensitätsverläufen. Weiter vorzugsweise umfasst die Auswerteeinheit einen Mikroprozessor zum Durchführen einer Auswertung der detektierten bzw. gemessenen Intensitäten, insbesondere zum Abgleichen oder Vergleichen eines oder mehrerer gemessener phasenabhängiger Intensitätsverläufe mit den gespeicherten modellierten phasenabhängigen Intensitätsverläufen. Die Auswerteeinheit kann insbesondere einen Computer umfassen. Zusätzlich kann die Auswerteeinheit ein Ausgabegerät, z.B. einen Bildschirm und/oder einen Drucker, zum Anzeigen und/oder Ausgeben der gemessenen Werte bzw. zum Anzeigen und/oder Ausgeben der ermittelten Werte für die Kalibrationsparameter, insbesondere der effektiven Reflektivität und/oder der Weglänge des optischen Resonators.

Ein weiterer nicht beanspruchter unabhängiger Aspekt zur Lösung der Aufgabe betrifft die Verwendung der erfindungsgemäßen Resonatorvorrichtung zur Messung von Gasen bzw. Spurengasen und/oder Partikeln und/oder Streuungsintensitäten. Insbesondere kann die erfindungsgemäße Resonatorvorrichtung für eine Cavity Enhanced DOAS und/oder für eine BB-CEAS verwendet werden. Vorzugsweise ist hierzu der Detektor ein Spektrometer. Es versteht sich, dass die erfindungsgemäße Resonatorvorrichtung grundsätzlich für alle auf einen Resonator bezogenen spektroskopischen Messsysteme verwendet werden kann.

Somit können vorteilhafterweise die Messung von Spurengasen und die dafür notwendige Bestimmung der Weglänge des optischen Resonators mit nur einer einzigen Vorrichtung vorgenommen werden. Der Befehl für die Durchführung einer Kalibration bzw. Weglängenbestimmung kann automatisch, insbesondere elektronisch, erfolgen oder im Rahmen einer routinemäßigen Kalibration. Es muss keine aufwendige Modifikation am Messaufbau durchgeführt werden. Die Messung bedarf keiner Überwachung, d.h. die Messung kann automatisch ohne Anwesenheit eines Experimentators ablaufen. Ein weiterer Vorteil ist, dass die eigentliche Messung, d.h. die Messung der Konzentration von Spurengasen, zur Kalibration nicht unterbrochen werden muss. Vielmehr können auch während der Kalibration, d.h. der Weglängenbestimmung des optischen Resonators, Spektren aufgenommen werden, die zur spektralen Auswertung im Hinblick auf Spurenstoff-Konzentrationen herangezogen werden können. Die erfindungsgemäße Resonatorvorrichtung kann somit als Cavity Enhanced DOAS- und/oder als BB-CEAS-Messgerät mit integrierter Kalibration (Weglängenbestimmung des Resonators) verwendet werden.

Ein weiterer nicht beanspruchter unabhängiger Aspekt zur Lösung der Aufgabe betrifft die Verwendung eines schaltbaren Detektors, insbesondere eines CCD-Sensors, oder eines optischen Modulators, insbesondere einer Chopper-Einheit wie beispielsweise ein Stimmgabel-Chopper, eine DLP-Einheit, ein Flüssigkristall, ein Schlitzrad, ein rotierender Polygonspiegel, ein akustooptischer Modulator oder ein elektrooptischer Modulator, zur Kalibration bzw. zum Bestimmen der effektiven Reflektivität und/oder der Weglänge eines optischen Resonators. Der schaltbare Detektor bzw. der optische Modulator sind dabei ausgelegt, ein moduliertes Signal auf Basis von aus dem optischen Resonator austretendem Licht zu erzeugen.

Dies ermöglicht die Kalibration ohne Verbrauchsmittel oder Gase und liefert zudem eine hohe Genauigkeit und Reproduzierbarkeit der Messung.

Die Erfindung betrifft auch ein Computerprogrammprodukt, wie im Anspruch 11 definiert. Insbesondere ist unter einem Computerprogrammprodukt ein auf einem Datenträger gespeichertes Programm zu verstehen. Insbesondere ist der Programmcode auf einem Datenträger gespeichert. Mit anderen Worten umfasst das Computerprogrammprodukt computerlesbare Anweisungen, welche, wenn geladen in einen Speicher eines Computers und ausgeführt von dem Computer, bewirken, dass der Computer ein oben beschriebenes erfindungsgemäßes Verfahren durchführt.

Für die oben genannten weiteren unabhängigen Aspekte und insbesondere für diesbezügliche bevorzugte Ausführungsformen gelten auch die vor- oder nachstehend gemachten Ausführungen zu den Ausführungsformen des ersten Aspekts. Insbesondere gelten für einen unabhängigen Aspekt der vorliegenden Erfindung und für diesbezügliche bevorzugte Ausführungsformen auch die vor- und nachstehend gemachten Ausführungen zu den Ausführungsformen der jeweils anderen Aspekte.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann, und daher in Erwägung gezogen und auch als von der Beschreibung umfasst angesehen werden soll.

Kurze Beschreibung der Zeichnungen

Figur 1    zeigt ein schematisches Diagramm zur prinzipiellen Funktionsweise der erfindungsgemäßen Resonatorvorrichtung;

Figur 2    zeigt eine schematische Darstellung des Aufbaus der erfindungsgemäßen Resonatorvorrichtung gemäß einer Ausführungsform;

Figur 3    zeigt beispielhafte Kurvenverläufe für zwei Zeit-Zyklen zur Erklärung des Prinzips des erfindungsgemäßen Verfahrens;

dabei zeigt:

Figur 3a    beispielhafte Lichtpulse;

Figur 3b    die von den Lichtpulsen gemäß der Figur 4a resultierende Photonenpopulation im Resonator;

Figur 3c    eine beispielhafte optische Modulation für zwei unterschiedliche Phasenbeziehungen $\xi 1$ und $\xi 2$;

Figur 3d    die beim Detektor ankommende instantane sowie die integrierte bzw. gemittelte Lichtintensität für zwei unterschiedliche Phasenbeziehungen $\xi 1$ und $\xi 2$;

Figur 4    zeigt einen beispielhaft modellierten 3D-Plot der durch den optischen Modulator transmittierten Lichtintensität in Abhängigkeit von der Phase $\xi$ und der Abklingzeit $\tau$;

Figur 5    zeigt modellierte phasenabhängige Intensitätsverläufe für unterschiedliche Abklingzeiten bzw. Weglängen;

Figur 6    zeigt die Genauigkeit des erfindungsgemäßen Verfahrens anhand beispielhafter Messkurven der mit verschiedenen Methoden bestimmten Weglänge eines optischen Resonators in Abhängigkeit von der Wellenlänge $\lambda$ des in den Resonator eingekoppelten Lichts;

Figur 7    zeigt die Reproduzierbarkeit des erfindungsgemäßen Verfahrens anhand von fünf aufeinanderfolgenden beispielhaften Messkurven der ermittelten Weglänge eines optischen Resonators in Abhängigkeit von der Wellenlänge $\lambda$ des in den Resonator eingekoppelten Lichts;

Figur 8    zeigt beispielhafte Messkurven der ermittelten Weglänge eines optischen Resonators in Abhängigkeit von der Wellenlänge $\lambda$ des in den Resonator eingekoppelten Lichts für unterschiedliche Modulationsfrequenzen.

Figur 9    zeigt schematische Skizzen zur Erzeugung eines Detektionssignals bzw. modulierten Signals mit Hilfe eines schaltbaren Detektors. Dabei ist in der Figur 9a eine Modulation der Sensitivität des Detektors gezeigt. Die Figur 9b veranschaulicht ein photosensitives Register und ein nicht- photosensitives Auslese-Register des Detektors. In der Figur 9c ist ein Sammeln von Photoelektronen zum Erzeugen des modulierten Signals und ein Auslesen des modulierten Signals angedeutet.

Detaillierte Beschreibung der Zeichnungen

Bei der Bestimmung von Spurengasen wird das charakteristische Absorptionsverhalten verschiedener Absorber ausgenutzt, um diese eindeutig zu identifizieren und deren Konzentrationsgehalt zu bestimmen. Zur Verbesserung der Messergebnisse wird bei der CE-DOAS und der BB-CEAS Methode ein optischer Resonator als Messzelle verwendet. Für die Auswertung der Messergebnisse ist es jedoch erforderlich, dass die Weglänge $L(\lambda)$ des für die Messung verwendeten optischen Resonators, sowohl in ihrer spektralen Form als auch absolut, mit ausreichender Genauigkeit vorliegt.

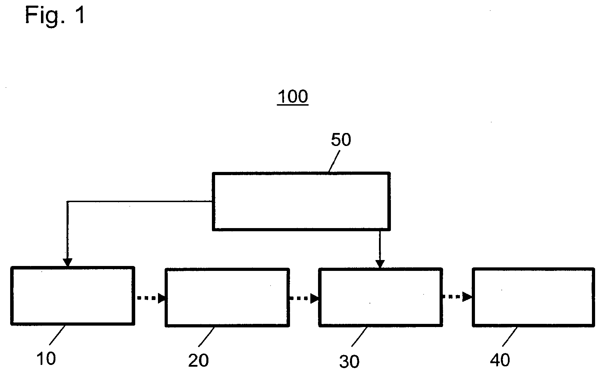

Zur Kalibration bzw. zur Bestimmung der effektiven Reflektivität und/oder der Weglänge eines optischen Resonators dient die in der **Figur 1** mittels eines Flussdiagramms schematisch dargestellte erfindungsgemäße Resonatorvorrichtung 100. Die Resonatorvorrichtung 100 umfasst eine Lichtquelle 10, einen optischen Resonator 20, einen optischen Modulator 30, einen Detektor 40 und eine Steuereinheit 50. Die Lichtquelle 10 wird moduliert bzw. gepulst betrieben, d.h. das von der Lichtquelle ausgesandte Licht weist eine modulierte bzw. gepulste Intensität auf. Mit anderen Worten sendet die Lichtquelle 10 Lichtpulse einer bestimmten Frequenz aus. Alternativ ist es auch möglich, eine ungepulste Lichtquelle z.B. in Kombination mit einem Shutter zu verwenden, um die Lichtpulse zu erzeugen. Zur Erzeugung der Lichtpulse wird somit allgemein eine Lichtpulserzeugungseinheit verwendet. Der optische Resonator 20 kann als Messzelle, beispielsweise als DOAS-Messzelle, dienen. Der optische Modulator moduliert das von dem optischen Resonator 20 ausgekoppelte Licht mit einer bestimmten Modulationsfrequenz. Mit Hilfe des Detektors 40 wird das vom optischen Modulator 30 modulierte Licht detektiert. Die Steuereinheit 50 steuert die Lichtpulserzeugungseinheit bzw. die Lichtquelle 10 und den optischen Modulator 30. Insbesondere kann mit der Steuereinheit 50 die Lichtpulsfrequenz und die Modulationsfrequenz geregelt oder eingestellt werden. Dabei ist die Steuereinheit 50 ausgelegt, die Frequenzen derart einzustellen, dass die Lichtpulsfrequenz und die Modulationsfrequenz im Wesentlichen übereinstimmen oder dass die Lichtpulsfrequenz im Wesentlichen ein ganzzahliges Vielfaches der Modulationsfrequenz beträgt oder dass die Modulationsfrequenz im Wesentlichen ein ganzzahliges Vielfaches der Lichtpulsfrequenz beträgt. Mit anderen Worten steuert die Steuereinheit 50 die Lichtpulserzeugungseinheit, d.h. die Lichtquelle 10 und/oder die Leistungseinheit 1, und den optischen Modulator 30. Insbesondere können die Lichtpulserzeugungseinheit und der optische Modulator 30, d.h. die Lichtpulsfrequenz und die Modulationsfrequenz, miteinander synchronisiert werden. Beispielsweise kann diese Synchronisation mittels der Steuereinheit 50 erfolgen.

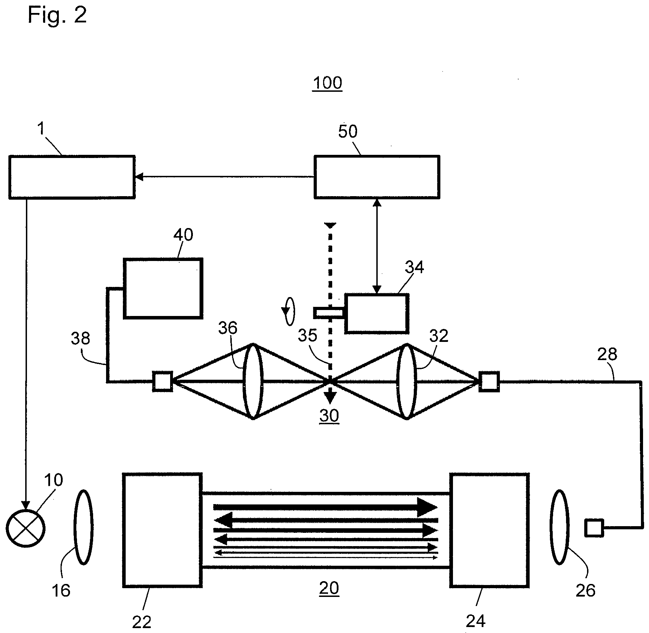

Die **Figur 2** zeigt eine schematische Darstellung des detaillierten Aufbaus der erfindungsgemäßen Resonanzvorrichtung 100 gemäß einer Ausführungsform. Der Aufbau umfasst wiederum eine Lichtquelle 10, hier eine LED-Lampe, einen optischen Resonator 20 mit einem ersten Resonatorspiegel 22 und einem zweiten Resonatorspiegel 24, einem optischen Modulator 30, einem Detektor 40 und einer Steuereinheit 50.

Die LED-Lampe 10 wird mit Hilfe einer LED Leistungseinheit 1 mit Energie bzw. Spannung versorgt. Das von der LED-Lampe 10 erzeugte gepulste Licht wird über eine Einkopplungslinse 16 in den optischen Resonator 20 eingekoppelt. In dem Resonator wird das eingekoppelte Licht von den beiden Resonatorspiegeln 22 und 24 vielfach hin- und herreflektiert, bis es schließlich, abhängig von der jeweiligen Reflektivität der Spiegel, den Resonator 20 über den zweiten Resonatorspiegel 24 verlässt. Das ausgekoppelte Licht wird über eine Auskoppellinse 26 in eine erste optische Faser 28 eingebracht, mit deren Hilfe das Licht bzw. die Lichtpulse zu dem optischen Modulator 30 umgelenkt werden kann bzw. können. Die erste Lichtfaser 28 hat in diesem Ausführungsbeispiel einen Durchmesser von 400 $\mu$m und eine numerische Apertur von $N_A$ = 0,22. Mittels einer ersten Modulatorlinse 32 gelangt das von der ersten Lichtfaser 28 umgelenkte Licht in den optischen Modulator 30, welcher in dem Ausführungsbeispiel der Figur 2 eine Schlitzrad-Vorrichtung darstellt. Insbesondere wird die erste Lichtfaser 28 mittels der ersten Modulatorlinse 32 in eine Schlitzrad-Ebene projiziert.

Die Schlitzrad-Vorrichtung umfasst einen Motor 34 und ein geschlitztes Rad 35, welches von dem Motor 34 angetrieben und in Rotation versetzt wird. Das Schlitzrad hat z.B. einen Durchmesser von 30 cm und weist 100 über den Umfang des Schlitzrads gleichmäßig angeordnete Schlitze auf. Es versteht sich, dass natürlich auch ein Schlitzrad mit einem anderen Durchmesser und/oder einer anderen Anzahl von Schlitzen verwendet werden kann. Durch den optischen Modulator bzw. der Schlitzrad-Vorrichtung 30 wird das von dem Resonator 20 ausgekoppelte Licht in seiner Intensität moduliert. Die Modulation erfolgt dabei mit einer bestimmten Modulationsfrequenz, die in dem Ausführungsbeispiel der **Figur 2** durch die Rotationsfrequenz des Schlitzrades 35 bestimmt wird.

Das vom optischen Modulator 30 bzw. der Schlitzrad-Vorrichtung modulierte Licht wird schließlich mittels einer zweiten Modulatorlinse 36 in eine zweite Lichtfaser 38 eingebracht, in der das Licht zum Detektor 40 geführt wird. Mit anderen Worten wird das virtuelle Bild der ersten Lichtfaser 28 mittels der zweiten Modulatorlinse 36 in die zweite Lichtfaser 38 projiziert. Die zweite Lichtfaser 38 weist in dem gezeigten Ausführungsbeispiel ebenfalls einen Durchmesser von 400 $\mu$m und eine numerische Apertur von $N_A$ = 0,22 auf.

Sowohl die LED-Leistungseinheit 1 wie auch der Motor 34 des optischen Modulators 30 werden mit der Steuereinheit 50 gesteuert. Die Steuereinheit 50 ist dabei derart ausgelegt, dass die Frequenz der von der LED-Lampe 10 erzeugten Lichtpulse mit der Modulationsfrequenz des optischen Modulators 30 im Wesentlichen übereinstimmt. Zudem ist die Steuereinheit 50 ausgelegt, eine Phasenverschiebung $\xi$ zwischen der gepulst betriebenen Lichtquelle 10 und dem optischen Modulator 30 einzustellen. Die Phasenverschiebung $\xi$ kann von 0° bis 360° beispielsweise in 1°-Schritten, eingestellt werden.

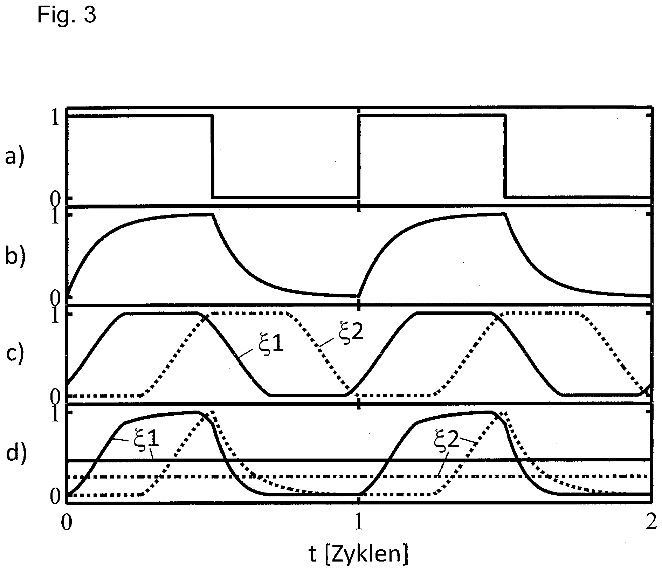

Die wesentliche Innovation der vorliegenden Erfindung ist das Einfügen des optischen Modulators 30, wie z.B. eines rotierendes Schlitzrades, eines Stimmgabel-Choppers, eines Flüssigkristall-Element-Choppers oder eines beliebig anderen optischen Modulators, in herkömmliche CE-DOAS oder BB-CEAS Geräte zur Kalibration. Mit dem neuartigen Aufbau wird auch ein im Bereich optischer Resonatoren neuartiges Verfahren bzw. ein neuartiger Messalgorithmus für die Bestimmung der Weglänge bereitgestellt. Das Prinzip des erfindungsgemäßen Verfahrens wird nachfolgend anhand von **Figur 3** näher erläutert.

Die **Figur 3** zeigt das Prinzip des erfindungsgemäßen Verfahrens, insbesondere die dynamischen Vorgänge, die während zwei Pulszyklen ablaufen.

In der **Figur 3a** sind zwei Lichtpulse der Lichtpulserzeugungseinheit bzw. der Lichtquelle 10 dargestellt. Die Lichtquelle 10 wird moduliert, d.h. im Pulsbetrieb betrieben, mit einer Frequenz von wenigen kHz, insbesondere von 1 bis 10 kHz.

Die **Figur 3b** zeigt die dadurch resultierende Photonenpopulation im Resonator, welche zur Ausgangsintensität des Lichts proportional ist. Die Photonen-Population im Resonator passt sich den Lichtpulsen an. Typische Zeitkonstanten dafür sind kleiner als 20 $\mu$s, die Weglängen kleiner als 6 km entsprechen. Die Intensität des vom Resonator 20 ausgekoppelten Lichts ist proportional zur Zahl der Photonen im Resonator. Der zwischen Resonator 20 und Detektor 40 angeordnete optische Modulator 30 transmittiert und blockiert abwechselnd den Lichtweg zum Detektor 40 mit definierter Phasenbeziehung zum Lichtpuls.

Die **Figur 3c** zeigt eine durch den optischen Modulator 30 bewirkte Modulation des vom Resonator 20 ausgekoppelten Lichts für zwei exemplarische Phasenbeziehungen $\xi_1$ und $\xi_2$ zwischen der gepulsten Lichtquelle 10 und dem optischen Modulator 30. Die durchgezogene Kurve entspricht einer ersten Phasenbeziehung $\xi_1$ und die gestrichelte Kurve entspricht einer zweiten Phasenbeziehung $\xi_2$. Die beim Detektor 40 ankommende Intensität ist, wieder für die zwei beispielhaften Phasenbeziehungen $\xi_1$ und $\xi_2$, in der Figur 3d gezeigt. Wie in der Figur 3c entspricht auch in der Figur 3d die durchgezogene Kurve der ersten Phasenbeziehung $\xi_1$ und die gestrichelte Kurve der zweiten Phasenbeziehung $\xi_2$. Es ist jeweils sowohl die beim Detektor instantan ankommende Intensität als auch die über mehrere Perioden gemittelte Intensität (horizontale Geraden) dargestellt. Die instantane Intensität und die gemittelte Intensität sind jeweils eine Funktion der Abklingzeit $\tau$ bzw. der Weglänge $L$ und der Phasenbeziehung bzw. Phase $\xi$ zwischen Lichtpuls und optischem Modulator 30. Der Detektor 40 integriert über mehrere tausend Zyklen, d.h. über mehrere Millisekunden und misst auf diese Weise die mittlere Intensität.

Da nur die mittlere Intensität gemessen wird, ist auch ein Spektrometer, welches für eine spektroskopische Messung, wie z.B. eine DOAS-Messung, benutzt wird, als Detektor 40 geeignet. Damit kann die Weglänge $L(\lambda)$ auch spektral bestimmt werden.

Diese mittlere Intensität $I$ kann numerisch in Abhängigkeit der Lichtpulsform, der Transmissionskurve des optischen Modulators, der Phasenbeziehung $\xi$, sowie der Weglänge $L$ berechnet werden. Für die numerische Berechnung der modellierten phasenabhängigen Intensitätsverläufe wird zunächst die Photonenzahl bzw. die Ladung im Resonator auf Basis des Lichtpulsprofils der Lichtquelle modelliert. Schließlich wird die Transmission zum Detektor bzw. Spektrometer auf Basis des Transmissionsprofils des optischen Modulators berechnet. Das Lichtpulsprofil der Lichtquelle und das Transmissionsprofil des optischen Modulators können dabei bekannt bzw. vorbestimmt sein oder, insbesondere mittels einer Photodiode, gemessen werden. Die Transmission zum Detektor wird nacheinander für verschiedene Abklingzeiten $\tau$ bzw. Weglängen $L$ und Phasen $\xi$ modelliert. Auf diese Weise können die modellierten phasenabhängigen Intensitätsverläufe erhalten werden. Die numerische Berechnung erfolgt auf Basis eines diskreten Zeitinkrements, welches je nach gewünschter Genauigkeit gewählt werden kann. Beispielsweise beträgt das diskrete Zeitinkrement 10 ns. Die numerische Berechnung der modellierten phasenabhängigen Intensitätsverläufe kann mit herkömmlichen Programmiertechniken, beispielsweise unter Verwendung der Programmiersprache C++, erfolgen. Die charakteristische Form der $I(\xi)$-Spektren wird zur Kalibration des optischen Resonators bzw. zur Weglängenbestimmung herangezogen. Alternativ oder zusätzlich zu einem Vergleich des gemessenen bzw. erstellten phasenabhängigen Intensitätsverlaufs mit den modellierten phasenabhängigen Intensitätsverläufen kann die Kalibration des optischen Resonators auch durch eine Parametrisierung des gemessenen bzw. erstellten phasenabhängigen Intensitätsverlaufs erfolgen.

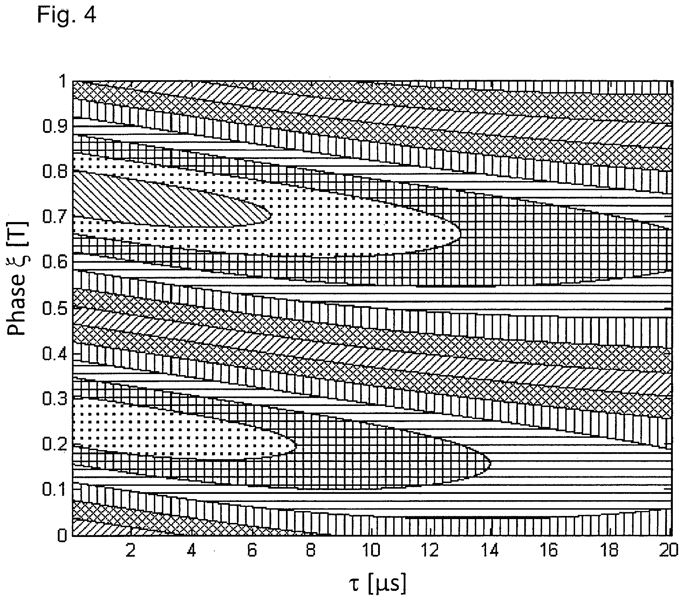

In der **Figur 4** ist ein beispielhafter 3D-Plot der durch den optischen Modulator transmittierten Lichtintensität in Abhängigkeit der Phase $\xi$ und der Abklingzeit $\tau$ gezeigt. Der 3D-Plot wurde für eine Modulationsfrequenz von 10 kHz modelliert. Die in dem 3D-Plot dargestellten unterschiedlichen Strukturen bzw. Muster bedeuten jeweils eine unterschiedliche Lichtintensität. Die durch den optischen Modulator transmittierte Lichtintensität ist somit eine Funktion sowohl der Phase $\xi$ zwischen Chopper und Lichtpuls als auch der Abklingzeit $\tau$ bzw. der Weglänge $L$ des optischen Resonators. Diese Abhängigkeit kann genutzt werden, um durch Messung der durch den optischen Modulator transmittierten Lichtintensität in Abhängigkeit von der Phase $\xi$, d.h. durch Messung von Phasenspektren, die Weglänge $L$ des optischen Resonators zu bestimmen.

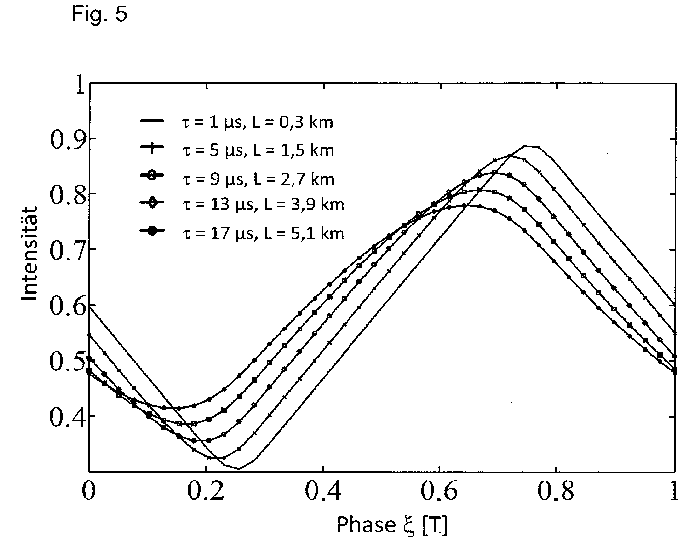

Der Messablauf kann wie folgt erfolgen: Die Lichtquelle (LED) 10 wird moduliert bzw. gepulst betrieben. Mit gleicher Frequenz wird der optische Modulator 30 betrieben. Durch die Wahl von verschiedenen Phasenbeziehungen $\xi$ wird nun ein phasenmoduliertes Spektrum $I(\xi)$ aufgenommen. Bei der Verwendung eines Spektrometers als Detektor 40 entsteht so für jeden Kanal des Spektrometers ein eigenes Spektrum $I(\xi)$ gemäß der **Figur 5.**

Die **Figur 5** zeigt modellierte phasenabhängige Intensitätsverläufe des vom optischen Modulator modulierten Lichts für unterschiedliche Abklingzeiten $\tau$ bzw. Weglängen $L$, wobei in diesem Beispiel entsprechend der **Figur 4** eine Modulationsfrequenz von 10 kHz gewählt wurde. Wie aus der **Figur 5** hervorgeht, ergibt sich für verschiedene Weglängen $L$ jeweils ein charakteristischer phasenabhängiger Verlauf der Intensität $I(\xi)$, d.h. jeweils ein charakteristisches phasenabhängiges Intensitätsspektrum.

Die Kalibration bzw. die Bestimmung der Weglänge kann somit über einen Abgleich des gemessenen $I(\xi)$-Spektrums mit einer Vielzahl von modellierten $I(\xi)$-Spektren erfolgen. Die modellierten $I(\xi)$-Spektren werden numerisch für verschiedene Weglängen berechnet. Der Abgleich kann z.B. durch lineares Fitten mithilfe des Levenberg-Marquardt-Algorithmus erfolgen, wobei die Größe der Restrukturen (RMS) als Maß für die Qualität der Zuordnung dient. Die Kurve der besten Übereinstimmung indiziert die zugehörige Weglänge $L$. Bei der Verwendung des Spektrometers als Detektor 40 wird die Auswertung für jeden Kanal einzeln durchgeführt. Auf diese Weise ist es möglich, die Weglänge $L(\lambda)$ des optischen Resonators, sowohl in ihrer spektralen Form als auch absolut, mit hoher Genauigkeit zu bestimmen.

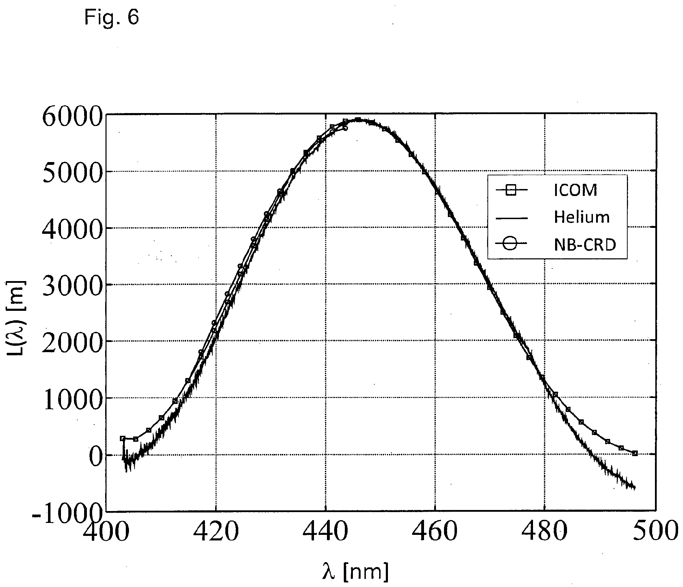

In den **Figuren 6 bis 8** sind beispielhafte Messungen gezeigt, aus denen hervorgeht, dass das erfindungsgemäße Verfahren eine hohe Genauigkeit und eine hohe Reproduzierbarkeit aufweist. Zudem ist gezeigt, dass das erfindungsgemäße Verfahren bei unterschiedlichen Modulationsfrequenzen eingesetzt werden kann.

Die **Figur 6** zeigt beispielhafte Messkurven der mit verschiedenen Methoden bestimmten Weglänge $L(\lambda)$ eines typischen optischen Resonators in Abhängigkeit von der Wellenlänge $\lambda$ des in den Resonator eingekoppelten Lichts. Dabei bezeichnet ICOM (Integrated Calibration by means of Optical Modulation) das erfindungsgemäße Verfahren, welches in der Figur 6 mit einer Helium-Kalibration und der Narrow Band Cavity Ringdown (NB-CRD) Methode verglichen wird. Es besteht eine hohe Übereinstimmung der verschiedenen Methoden. Im Vergleich zu dem erfindungsgemäßen Verfahren ICOM ist die spektrale Abdeckung bei NB-CRD begrenzt. Die Helium-Kalibration liefert teilweise (in diesem Fall bei kurzen Wellenlängen) offensichtlich falsche (negative) Werte. Insofern ist das erfindungsgemäße Verfahren ICOM den herkömmlichen Verfahren überlegen.

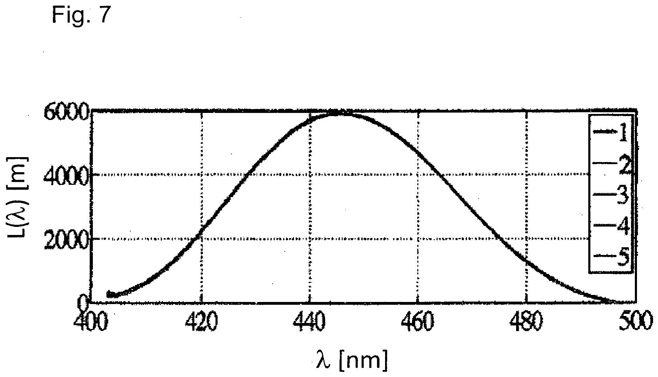

Die **Figur 7** zeigt die Reproduzierbarkeit des erfindungsgemäßen Verfahrens. Dazu wurden fünf Messungen nacheinander ausgeführt und die jeweiligen Ergebnisse der Weglängenbestimmung verglichen. Die einzelnen Messreihen zeigen für sämtliche Wellenlängen Differenzen von nur wenigen Metern. Diese geringen Unterschiede sind in der **Figur 7** nicht ersichtlich, da die Messkurven in der gewählten Skala quasi übereinanderliegen. Die Präzision und die Reproduzierbarkeit der Weglängenbestimmung eines optischen Resonators mittels des erfindungsgemäßen Verfahrens sind daher sehr gut.

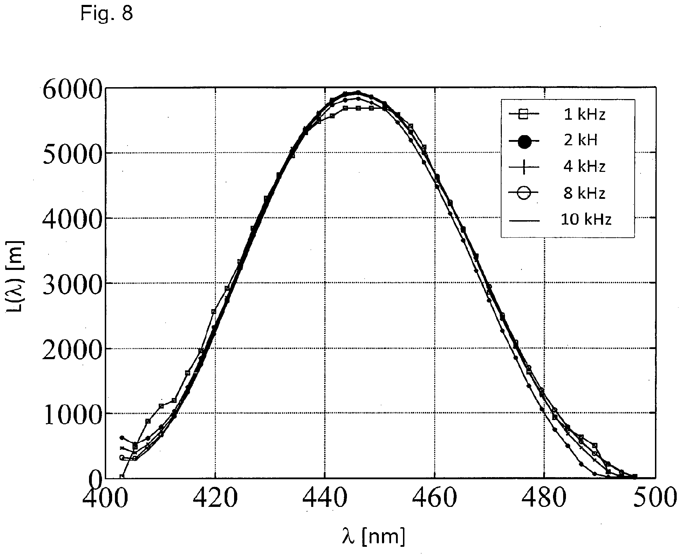

Die **Figur 8** zeigt beispielhafte Messkurven der ermittelten Weglänge eines optischen Resonators in Abhängigkeit von der Wellenlänge $\lambda$ des in den Resonator eingekoppelten Lichts für unterschiedliche Modulationsfrequenzen. Auf diese Weise wurde die Anwendbarkeit des erfindungsgemäßen Verfahrens bei der Verwendung von langsamen Modulatoren getestet. Wie aus der **Figur 8** hervorgeht, ist das erfindungsgemäße Verfahren auch noch bei Modulationsfrequenzen von wenigen kHz einsetzbar und damit für die Umsetzung mit elektronisch optischen Modulatoren, insbesondere LCD-Choppern, geeignet.

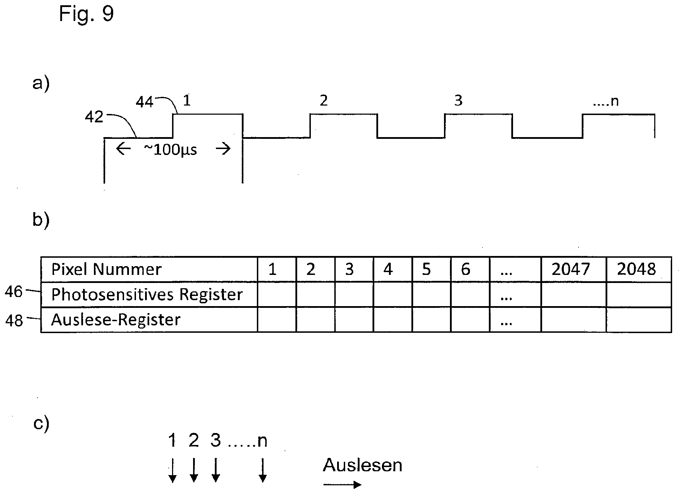

In der **Figur 9** ist anhand schematischer Skizzen die Erzeugung eines Detektionssignals bzw. modulierten Signals mit Hilfe eines schaltbaren Detektors, insbesondere eines CCD-Sensors bzw. CCD-Chips, dargestellt. Anstelle einer Modulation des von dem optischen Resonator austretenden Lichts mittels eines optischen Modulators 30 wird der Betriebszustand bzw. die Sensitivität des Detektors 40 moduliert.

Zwar kann der Modulator dabei in einer bevorzugten Ausführungsform nach wie vor ein optischer Modulator, insbesondere eine Blende, sein. Jedoch ist in einer anderen bevorzugten Ausführungsform z.B. im Falle eines CCD-Chips als Detektor 40 keine mechanische Blende notwendig. Damit in der photosensitiven Schicht des CCD-Chips Photonen in Elektronen gewandelt und gesammelt werden, wird insbesondere eine geeignete Spannung angelegt. Die Modulation erfolgt somit in dieser alternativen Ausführungsform nicht optisch, sondern vorzugsweise elektrisch, insbesondere durch ein Einstellen bzw. Schalten einer an den Detektor angelegten Spannung. Der Modulator umfasst in dieser Ausführungsform eine Spannungsquelle, mit der die Sensitivität des Detektors bzw. CCD-Chips 40 eingestellt bzw. geschaltet werden kann. Insbesondere kann der Detektor bzw. dessen Sensitivität oder Betriebszustand aktiviert und deaktiviert, d.h. ein- und ausgeschaltet werden.

Das aus dem Resonator austretende Licht trifft in dieser alternativen zweiten Ausführungsform unmoduliert auf den CCD-Chip 40, der aber passend "sensitiv" bzw. "nicht-sensitiv" geschaltet wird. Das Schema, nach dem der CCD-Chip 40 "sensitiv" bzw. ."nicht-sensitiv" geschaltet wird, entspricht genau dem Schema, nach dem in der eingangs beschriebenen ersten Ausführungsform der optische Modulator 30 das Licht ein- und ausgeblendet hat, und die restlichen Verfahrensschritte zur Kalibrierung sind demnach identisch bzw. analog zur ersten Ausführungsform.

Im Vergleich zur ersten Ausführungsform, bei der ein optischer Modulator 30 verwendet wird, ist in der zweiten Ausführungsform die Modulationsfunktionalität direkt in den CCD-Chip 40, welcher wiederum Teil eines Spektrometers sein kann, integriert. Der Detektor bzw. CCD-Chip 40 selbst, welcher zum Auslesen der Spektren verwendet wird, sorgt also für die erforderliche Modulation. Mit anderen Worten wird in dieser zweiten Ausführungsform der optische Modulator 30 durch eine bestimmte Auslese-Prozedur mit Hilfe des schaltbaren Detektors 40 ersetzt. Das Prinzip ist hierbei, dass Photonen nur während bestimmter Zeitfenster detektiert werden. Diese Zeitfenster entsprechen somit den geöffneten Positionen des optischen Modulators bzw. Shutters.

In der **Figur 9a** sind die aktiven Zeitfenster 44, in denen Photonen detektiert werden bzw. in denen der Detektor 40 aktiv bzw. sensitiv geschaltet ist, schematisch dargestellt und von 1 bis n durchnummeriert. Mit n ist somit die Anzahl der Zeitfenster 44 bezeichnet, in denen der Detektor aktiv bzw. sensitiv ist. Zwischen den aktiven Zeitfenstern 44 liegen die inaktiven Zeitfenster 42, in denen der Detektor 40 inaktiv geschaltet ist bzw. in denen die Sensitivität des Detektors 40 ausreichend herabgesetzt ist. Die Modulation des Detektors 40 erfolgt vorzugsweise mit einer Frequenz größer oder gleich 10 kHz. In dem Beispiel der **Figur 9a** beträgt die Modulationsperiode etwa 100 $\mu$s.

In Analogie zu einem elektrooptischen Shutter kann die Modulation mittels CCD-Chip erfindungsgemäß durch die Verwendung eines photosensitiven Registers 46 und eines dunklen bzw. nicht-photosensitiven Registers 48 realisiert werden. Das nicht-photosensitive Register 48 wird auch als Ausleseregister bezeichnet und dient insbesondere als Speicher bzw. Buffer.

In der Figur 9b ist das photosensitive Register 46 und das nicht-photosensitive Auslese-Register 48 in Form einer Tabelle für Pixel 1 bis 2048 eines CCD-Sensors dargestellt. In der Figur 9c ist das Detektieren bzw. Sammeln von Photoelektronen zum Erzeugen des modulierten Signals und das Auslesen des modulierten Signals angedeutet. Die vertikalen Pfeile symbolisieren jeweils eine Verschiebung detektierter Elektronen von dem photosensitiven Register 46 in das Ausleseregister 48.

Insbesondere kann folgende Auslese-Prozedur erfolgen:

i) Detektieren bzw. Sammeln von Photoelektronen im photosensitiven Register 46 während eines aktiven Zeitfensters 44, beispielsweise während des ersten aktiven Zeitfensters;

ii) Verschieben der detektierten Photoelektronen in das Ausleseregister 48 am Ende des aktiven Zeitfensters 44;

iii) Warten während des inaktiven Zeitfensters 42;

iv) Leeren des photosensitiven Registers 46 am Ende des inaktiven Zeitfensters 42;

v) Wiederholen von Schritt i), d.h. Detektieren von Photoelektronen im photosensitiven Register 46, während des nächsten aktiven Zeitfensters, beispielsweise während des zweiten aktiven Zeitfensters;

vi) Verschieben bzw. Hinzufügen der detektierten Photoelektronen zu dem Ausleseregister 48 am Ende des besagten nächsten aktiven Zeitfensters, im Beispiel also am Ende des zweiten aktiven Zeitfensters;

vii) Wiederholen der Schritte iii) bis vi) bis das n-te aktive Zeitfenster erreicht ist;

viii) Auslesen des Ausleseregisters, insbesondere um ein Spektrum zu erhalten.

Anstatt dass Photoelektronen zu dem Ausleseregister 48 hinzugefügt werden (Schritt iv), ist es alternativ auch möglich, dass die vorher detektierten Photoelektronen vor dem Schritt v) von dem Ausleseregister 48 in das photosensitive Register 46 zurück verschoben werden und dass sodann mit den Schritten i) bis iv) weiter verfahren wird.

Die Anzahl n der Zeitfenster wird derart gewählt, dass vor dem Auslesen eine ausreichende Anzahl an Photoelektronen detektiert wird. Insbesondere wird die Anzahl n der Zeitfenster derart gewählt, dass sich ein ausreichendes und/oder ein vorgegebenes Signal-Rausch Verhältnis ergibt.

Im wissenschaftlichen Betrieb stellt das erfindungsgemäße Verfahren ICOM eine vielversprechende neue Methode dar und hat das Potential zum Standardverfahren heranzureifen. Bisher gab es kein Verfahren, welches das Problem der Weglängenbestimmung vollumfänglich und automatisiert löst. Deshalb wurde z.B. die CE-DOAS Methode im industriellen Umfeld bisher nicht in einem ihrem Potential entsprechenden Umfang eingesetzt. Mit Wegfall dieser Hürde kann die CE-DOAS Methode nun im Bereich der Umweltüberwachung und der Stickoxid-Messung in KFZ-Werkstätten verbreitete Anwendung finden und den Markt durchdringen.

**Bezugszeichenliste**

1 LED Leistungseinheit
10 Lichtquelle / LED
16 Einkoppellinse
20 optischer Resonator
22 erster Resonatorspiegel
24 zweiter Resonatorspiegel
26 Auskoppellinse
28 erste optische Faser / erste Lichtfaser
30 optischer Modulator
32 erste Modulatorlinse
34 Motor
35 Schlitzrad
36 zweite Modulatorlinse
38 zweite optische Faser / zweite Lichtfaser
40 Detektor
42 inaktives Zeitfenster des Detektors
44 aktives Zeitfenster des Detektors
46 photosensitives Register
48 nicht-photosensitives Register / Dunkelregister / Ausleseregister
50 Steuereinheit
100 Resonatorvorrichtung

**Patentansprüche**

1. Verfahren zur Kalibration eines optischen Resonators (20), umfassend die Schritte:

   - Erzeugen von Lichtpulsen einer bekannten Pulsfrequenz mittels einer Lichtpulserzeugungseinheit;
   - Einkoppeln der Lichtpulse in den Resonator (20);
   - Detektieren von aus dem Resonator (20) austretendem Licht mittels einer Detektionseinrichtung zur Erzeugung eines von dem zu detektierenden Licht abhängigen Detektionssignals, wobei die Detektionseinrichtung ausgelegt ist, das Detektionssignal mit Hilfe eines Modulators als ein mit einer Modulationsfrequenz moduliertes Signal zu erzeugen, wobei die Modulationsfrequenz und die Pulsfrequenz der erzeugten Lichtpulse miteinander synchronisiert werden, wobei vor dem Detektieren des aus dem Resonator (20) austretenden Lichts eine Phasenbeziehung zwischen der Pulsfrequenz der erzeugten Lichtpulse und der Modulationsfrequenz variiert oder eingestellt wird und das Detektieren des aus dem Resonator austretenden Lichts für verschiedene Phasenbeziehungen durchgeführt wird; und
   - Kalibrieren des optischen Resonators (20) auf Basis des Detektionssignals, wobei das Kalibrieren des optischen Resonators (20) ein Erstellen eines phasenabhängigen Intensitätsverlaufs des modulierten Signals und ein Charakterisieren des erstellten phasenabhängigen Intensitätsverlaufs mit Hilfe von Charakterisierungsparametern

   umfasst.

2. Verfahren nach Anspruch 1 , wobei die Detektionseinrichtung einen optischen Modulator (30) und einen Detektor (40) umfasst und das Detektieren von aus dem Resonator (20) austretendem Licht umfasst:

   - Modulieren des aus dem Resonator (20) austretenden Lichts mittels des optischen Modulators; und
   - Detektieren des modulierten Lichts mittels des Detektors (40).

3. Verfahren nach Anspruch 1 , wobei das Erzeugen des modulierten Signals ein Ändern der Sensitivität eines Detektors (40) der Detektionseinrichtung mit der Modulationsfrequenz und/oder ein mit der Modulationsfrequenz moduliertes Auslesen des Detektors (40) umfasst.

4. Verfahren nach Anspruch 3, wobei das Erzeugen des modulierten Signals ein Verschieben von detektierten Photoelektronen zwischen einem photosensitiven Register (46) und einem nicht-photosensitiven Ausleseregister (48) mit der Modulationsfrequenz umfasst.

**5.** Verfahren nach einem der vorangehenden Ansprüche, wobei das Kalibrieren des optischen Resonators (20) ferner ein Abgleichen des erstellten phasenabhängigen Intensitätsverlaufs mit einer Vielzahl von modellierten phasenabhängigen Intensitätsverläufen umfasst.

**6.** Verfahren nach einem der vorangegangenen Ansprüche, wobei das Kalibrieren des optischen Resonators (20) ein Ausgleichen und/oder Fitten auf Basis einer Modellfunktion umfasst.

**7.** Verfahren nach einem der vorangegangenen Ansprüchen, wobei

das Detektieren des aus dem Resonator (20) austretenden Lichts und/oder das Erzeugen des modulierten Signals ein Integrieren über eine Vielzahl von Lichtpulsen umfasst, und/oder wobei
das Detektieren des aus dem Resonator (20) austretenden Lichts mittels eines Spektrometers erfolgt.

**8.** Resonatorvorrichtung (100) zur Messung von Gasen und/oder Partikeln und/oder Streuungsintensitäten, umfassend:

- einen optischen Resonator (20);
- eine Lichtpulserzeugungseinheit zur Erzeugung von Lichtpulsen mit einer bekannten Pulsfrequenz, welche in den optischen Resonator (20) eingekoppelt werden können; und
- eine Detektionseinrichtung zum Detektieren von aus dem Resonator (20) austretendem Licht und Erzeugen eines von dem zu detektierenden Licht abhängigen Detektionssignals, wobei die Detektionseinrichtung ausgelegt ist, das Detektionssignal mit Hilfe eines Modulators als ein mit einer Modulationsfrequenz moduliertes Signal zu erzeugen, wobei die Modulationsfrequenz und die Pulsfrequenz der erzeugten Lichtpulse miteinander synchronisiert werden, wobei vor dem Detektieren des aus dem Resonator (20) austretenden Lichts eine Phasenbeziehung zwischen der Pulsfrequenz der erzeugten Lichtpulse und der Modulationsfrequenz variiert oder eingestellt wird und das Detektieren des aus dem Resonator austretenden Lichts für verschiedene Phasenbeziehungen durchgeführt wird
- eine Auswerteeinheit zum Kalibrieren des optischen Resonators (20) auf Basis des von der Detektionseinrichtung erzeugten modulierten Signals, wobei das Kalibrieren des optischen Resonators (20) ein Erstellen eines phasenabhängigen Intensitätsverlaufs des modulierten Signals und ein Charakterisieren des erstellten phasenabhängigen Intensitätsverlaufs mit Hilfe von Charakterisierungsparametern umfasst.

**9.** Resonatorvorrichtung (100) nach Anspruch 8, wobei die Detektionseinrichtung umfasst:

- einen optischen Modulator (30) zum Modulieren des aus dem Resonator (20) austretenden Lichts; und
- einen Detektor (40) zum Detektieren des modulierten Lichts, wobei insbesondere der optische Modulator (30) eine Chopper-Einheit, insbesondere einen Stimmgabel-Chopper oder eine DLP-Einheit oder einen Flüssigkristall oder ein Schlitzrad oder einen rotierenden Polygonspiegel oder einen akustooptischen Modulator oder einen elektrooptischen Modulator umfasst, und wobei insbesondere der Detektor (40) mittels des Modulators schaltbar und/oder in seiner Sensitivität einstellbar ist und insbesondere ein Spektrometer umfasst.

**10.** Resonatorvorrichtung (100) nach einem der Ansprüche 8 oder 9, ferner umfassend:

- eine Steuereinheit (50) zum Ansteuern der Lichtpulserzeugungseinheit und/oder des Modulators und/oder zum Einstellen einer Phasenbeziehung zwischen der Pulsfrequenz der erzeugten Lichtpulse und der Modulationsfrequenz.

**11.** Computerprogrammprodukt, welches maschinenlesbaren Programmcode umfasst, der, bei der Ausführung durch einen Computer, bewirkt, dass die Resonatorvorrichtung des Anspruchs 8 das Verfahren gemäß einem der Ansprüche 1 bis 7 ausführt.


**Claims**

**1.** Method for calibrating an optical resonator (20), comprising the steps of:

- generating light pulses of a known pulse frequency by means of a light pulse generation unit;
- coupling the light pulses into the resonator (20);

- detecting light emerging from the resonator (20) by means of a detection device for generating a detection signal dependent on the light to be detected, wherein the detection device is adapted to generate the detection signal by means of a modulator as a signal modulated with a modulation frequency, wherein the modulation frequency and the pulse frequency of the generated light pulses are synchronized with each other, wherein prior to detecting the light emerging from the resonator (20), a phase relationship between the pulse frequency of the generated light pulses and the modulation frequency is varied or set, and detecting the light emerging from the resonator is performed for different phase relationships and

- calibrating the optical resonator (20) based on the detection signal, wherein calibrating the optical resonator (20) comprises establishing a phase-dependent intensity curve of the modulated signal and characterizing the established phase-dependent intensity curve using characterization parameters.

2. Method according to claim 1, wherein the detection device comprises an optical modulator (30) and a detector (40) and the detection of light emerging from the resonator (20) comprises:

- modulating the light emerging from the resonator (20) by means of the optical modulator; and
- detecting the modulated light by means of the detector (40).

3. Method according to claim 1, wherein
generating the modulated signal comprises changing the sensitivity of a detector (40) of the detection device with the modulation frequency and/or a detector (40) read-out modulated at the modulation frequency.

4. Method according to claim 3, wherein
generating the modulated signal comprises shifting detected photoelectrons between a photosensitive register (46) and a non-photosensitive readout register (48) at the modulation frequency.

5. Method according to any one of the preceding claims, wherein calibrating the optical resonator (20) further comprises matching the established phase-dependent intensity curve with a plurality of modeled phase-dependent intensity curves.

6. Method according to any one of the preceding claims, wherein calibrating the optical resonator (20) comprises equalizing and/or filtering based on a model function.

7. Method according to any one of the preceding claims, wherein detecting the light

emerging from the resonator (20) and/or generating the modulated signal comprises integrating via a plurality of light pulses and/or wherein
detecting the light emerging from the resonator (20) is performed by means of a spectrometer.

8. Resonator device (100) for measuring gases and/or particles and/or scattering intensities, comprising:

- an optical resonator (20);
- a light pulse generation unit for generating light pulses at a known pulse frequency, which light pulses can be coupled into the optical resonator (20); and
- a detection device for detecting light emerging from the resonator (20) and generating a detection signal dependent on the light to be detected, wherein the detection device is adapted to generate the detection signal by means of a modulator as a signal modulated at a modulation frequency, wherein the modulation frequency and the pulse frequency of the generated light pulses are synchronized with each other, wherein prior to detecting the light emerging from the resonator (20), a phase relationship between the pulse frequency of the generated light pulses and the modulation frequency is varied or set, and the detection of the light emerging from the resonator is performed for different phase relationships;
- an evaluation unit for calibrating the optical resonator (20) based on the modulated signal generated by the detection means, wherein calibrating the optical resonator (20) comprises adjusting a phase-dependent intensity curve of the modulated signal and characterizing the established phase-dependent intensity curve using characterization parameters.

9. Resonator device (100) according to claim 8, wherein the detection device comprises:

- an optical modulator (30) for modulating the light emerging from the resonator (20); and

- a detector (40) for detecting the modulated light, wherein in particular the optical modulator (30) comprises a chopper unit, in particular a tuning fork chopper or a DLP unit or a liquid crystal or a slotted wheel or a rotating polygon mirror or an acousto-optical modulator or an electro-optical modulator, and wherein in particular the detector (40) is switchable by means of the modulator and/or adjustable in its sensitivity and in particular comprises a spectrometer.

10. Resonator device (100) according to any one of claims 8 or 9, further comprising:

- a control unit (50) for driving the light pulse generating unit and/or the modulator and/or for adjusting a phase relationship between the pulse frequency of the generated light pulses and the modulation frequency.

11. Computer program product comprising machine-readable program code which, when executed by a computer, causes the resonator device of claim 8 to perform the method of any one of claims 1 to 7.

**Revendications**

1. Procédé d'étalonnage d'un résonateur optique (20), comprenant les étapes:

- génération d'impulsions lumineuses d'une fréquence d'impulsion connue au moyen d'une unité de génération d'impulsions lumineuses;
- couplage des impulsions lumineuses dans le résonateur (20);
- détection de la lumière sortant du résonateur (20) au moyen d'un dispositif de détection pour générer un signal de détection dépendant de la lumière à détecter, le dispositif de détection étant conçu pour générer le signal de détection à l'aide d'un modulateur sous la forme d'un signal modulé à une fréquence de modulation, dans lequel la fréquence de modulation et la fréquence d'impulsion des impulsions lumineuses générées sont synchronisées l'une avec l'autre, dans lequel, avant la détection de la lumière sortant du résonateur (20), une relation de phase entre la fréquence d'impulsion des impulsions lumineuses générées et la fréquence de modulation est variée ou réglée, et la détection de la lumière sortant du résonateur est effectuée pour différentes relations de phase; et
- étalonnage du résonateur optique (20) sur la base du signal de détection, dans lequel l'étalonnage du résonateur optique (20) comprend l'établissement d'une courbe d'intensité dépendant de la phase du signal modulé et la caractérisation de la courbe d'intensité dépendant de la phase établie à l'aide de paramètres de caractérisation.

2. Procédé selon la revendication 1, dans lequel le dispositif de détection comprend un modulateur optique (30) et un détecteur (40) et dans lequel la détection de la lumière sortant du résonateur (20) comprend:

- moduler la lumière émergeant du résonateur (20) au moyen du modulateur optique; et
- détecter la lumière modulée au moyen du détecteur (40).

3. Procédé selon la revendication 1, dans lequel
la génération du signal modulé comprend une modification de la sensibilité d'un détecteur (40) du dispositif de détection à la fréquence de modulation et/ou une lecture du détecteur (40) modulée à la fréquence de modulation.

4. Procédé selon la revendication 3, dans lequel
la génération du signal modulé comprend un décalage de photoélectrons détectés entre un registre photosensible (46) et un registre de lecture non photosensible (48) à la fréquence de modulation.

5. Procédé selon l'une quelconque des revendications précédentes, dans lequel l'étalonnage du résonateur optique (20) comprend en outre une mise en correspondance de la courbe d'intensité en fonction de la phase générée avec une pluralité de courbes d'intensité en fonction de la phase modélisées.

6. Procédé selon l'une quelconque des revendications précédentes, dans lequel l'étalonnage du résonateur optique (20) comprend une égalisation et/ou un filtrage sur la base d'une fonction de modèle.

7. Procédé selon l'une quelconque des revendications précédentes, dans lequel

la détection de la lumière sortant du résonateur (20) et/ou la génération du signal modulé comprend une intégration via une pluralité d'impulsions lumineuses et/ou dans lequel
la détection de la lumière sortant du résonateur (20) est réalisée au moyen d'un spectromètre.

8. Dispositif résonateur (100) pour la mesure de gaz et/ou de particules et/ou d'intensités de diffusion, comprenant:

   - un résonateur optique (20);
   - une unité de génération d'impulsions lumineuses pour générer des impulsions lumineuses avec une fréquence d'impulsion connue, qui peuvent être couplées dans le résonateur optique (20); et
   - un dispositif de détection pour détecter la lumière sortant du résonateur (20) et générer un signal de détection dépendant de la lumière à détecter, le dispositif de détection étant conçu pour générer le signal de détection à l'aide d'un modulateur sous la forme d'un signal modulé à une fréquence de modulation, la fréquence de modulation et la fréquence d'impulsion des impulsions lumineuses générées étant synchronisées l'une avec l'autre, une relation de phase entre la fréquence d'impulsion des impulsions lumineuses générées et la fréquence de modulation étant variée ou réglée avant la détection de la lumière sortant du résonateur (20) et la détection de la lumière sortant du résonateur étant effectuée pour des relations de phase différentes
   - une unité d'évaluation pour calibrer le résonateur optique (20) sur la base du signal modulé généré par le dispositif de détection, le calibrage du résonateur optique (20) comprenant un réglage d'une courbe d'intensité en fonction de la phase du signal modulé et une caractérisation de la courbe d'intensité en fonction de la phase établie à l'aide de paramètres de caractérisation.

9. Dispositif résonateur (100) selon la revendication 8, dans lequel le dispositif de détection comprend:

   - un modulateur optique (30) pour moduler la lumière sortant du résonateur (20);
   - un détecteur (40) pour détecter la lumière modulée, dans lequel en particulier le modulateur optique (30) comprend une unité de hacheur, en particulier un hacheur à diapason ou une unité DLP ou un cristal liquide ou une roue à fente ou un miroir polygonal rotatif ou un modulateur acousto-optique ou un modulateur électro-optique et dans lequel en particulier le détecteur (40) peut être commuté au moyen du modulateur et/ou sa sensibilité peut être réglée et comprend en particulier un spectromètre.

10. Dispositif résonateur (100) selon l'une des revendications 8 ou 9, comprenant en outre:

    - une unité de commande (50) pour commander l'unité de génération d'impulsions lumineuses et/ou le modulateur et/ou pour ajuster une relation de phase entre la fréquence d'impulsion des impulsions lumineuses générées et la fréquence de modulation.

11. Produit programme d'ordinateur comprenant un code de programme lisible par une machine qui, lorsqu'il est exécuté par un ordinateur, amène le dispositif résonateur de la revendication 8 à mettre en œuvre le procédé selon l'une quelconque des revendications 1 à 7.

Fig. 1

Fig. 2

Fig. 3

a)

b)

c)    $\xi 1$    $\xi 2$

d)    $\xi 1$    $\xi 2$

t [Zyklen]

Fig. 4

Fig. 5

Fig. 6

Fig. 7

Fig. 8

Fig. 9

a)

b)

| Pixel Nummer | 1 | 2 | 3 | 4 | 5 | 6 | ... | 2047 | 2048 |
|---|---|---|---|---|---|---|---|---|---|
| 46 Photosensitives Register | | | | | | | ... | | |
| 48 Auslese-Register | | | | | | | ... | | |

c)

**IN DER BESCHREIBUNG AUFGEFÜHRTE DOKUMENTE**

**In der Beschreibung aufgeführte Nicht-Patentliteratur**

- Sensitive measurement of photon lifetime and true reflectances in an optical cavity by a phase-shift method. **HERBELIN J. M. et al.** Applied Optics. Optical Society of America, 01. Januar 1980, 144-147